# FASCICULE DE BREVET EUROPEEN

(11) **EP 1 800 794 B1**
(45) Date de publication et mention de la délivrance du brevet: **18.03.2009**
(21) Numéro de dépôt: 05112580.5
(22) Date de dépôt: 21.12.2005
(51) Int. Cl.: B23Q 1/54

(54) **Un dispositif de déplacement d'un ensemble porte-outil**
Vorrichtung zum Verschieben eines Werkzeugträgers
A device for moving a tool carrier

(43) Date de publication de la demande: 27.06.2007
(73) Titulaire: Tornos SA, 2740 Moutier (CH)
(72) Inventeur: Schuettel, Patrick, 2762 Roches (CH); Frésard, Michel, 2740 Moutier (CH)
(74) Mandataire: BOVARD AG

(56) Documents cités:
- WO-A-00/10776
- DE-A1- 3 913 655

## Description

L'invention se rapporte à un dispositif pour déplacer au moins un ensemble porte-outil sur une machine-outil. L'utilisation des bras robotiques pour le déplacement d'un porte-outil sur une machine-outil est connu: voir par exemple DE3913655A1.

Précisément, l'invention se rapporte à un dispositif pour déplacer au moins un ensemble porte-outil entre,
. une première zone d'une machine-outil dans laquelle un corps, tel un outil porté par cet ensemble porte-outil, peut entrer en contact avec un autre corps, telle une pièce à usiner, aligné sur un axe prédéterminé de cette machine-outil, dit axe de référence, et
. une deuxième zone de la machine-outil dans laquelle cet ensemble porte-outil peut être escamoté de manière à libérer totalement ladite première zone.

L'invention se rapporte également à la machine-outil équipée du dispositif précité pour déplacer d'un ensemble porte-outil.

Un résultat que l'invention vise à obtenir est un dispositif du type précité qui, bien qu'il puisse être aisément et rapidement escamoté d'une première zone d'une machine-outil vers une deuxième zone de la machine-outil et vice versa, peut être placé dans des positions très précises par rapport à un axe de référence.

A cet effet, l'invention a pour objet un dispositif selon la revendication 1.

L'invention a également pour objet une machine-outil équipée du dispositif précité. L'invention sera bien comprise à la lecture de la description ci-après faite à titre d'exemple non limitatif en regard du dessin ci-annexé qui représente schématiquement :
- figure 1, le dispositif selon l'invention en vue de dessus,

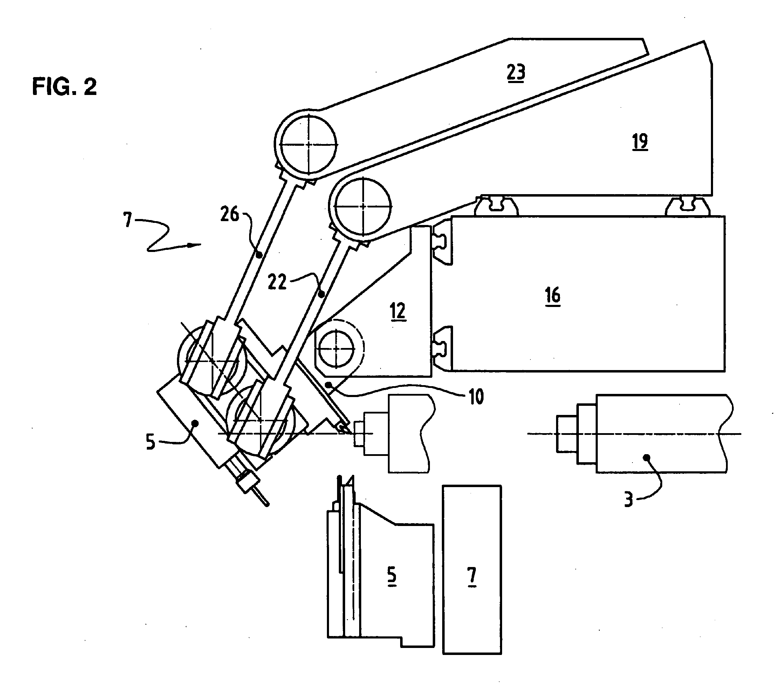

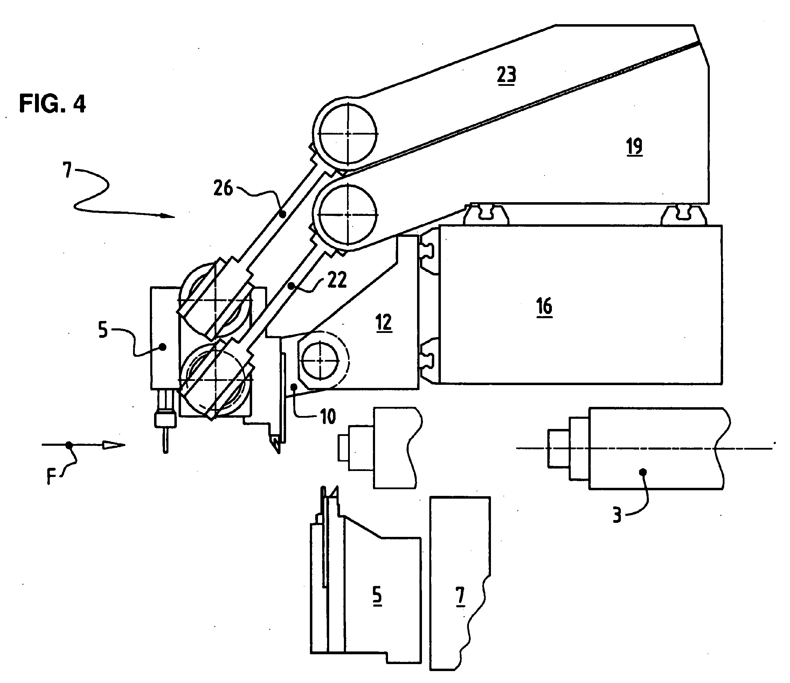

- figure 2 à 5, également en vue de dessus, le dispositif selon l'invention présentant un ensemble porte-outil dans différentes positions,

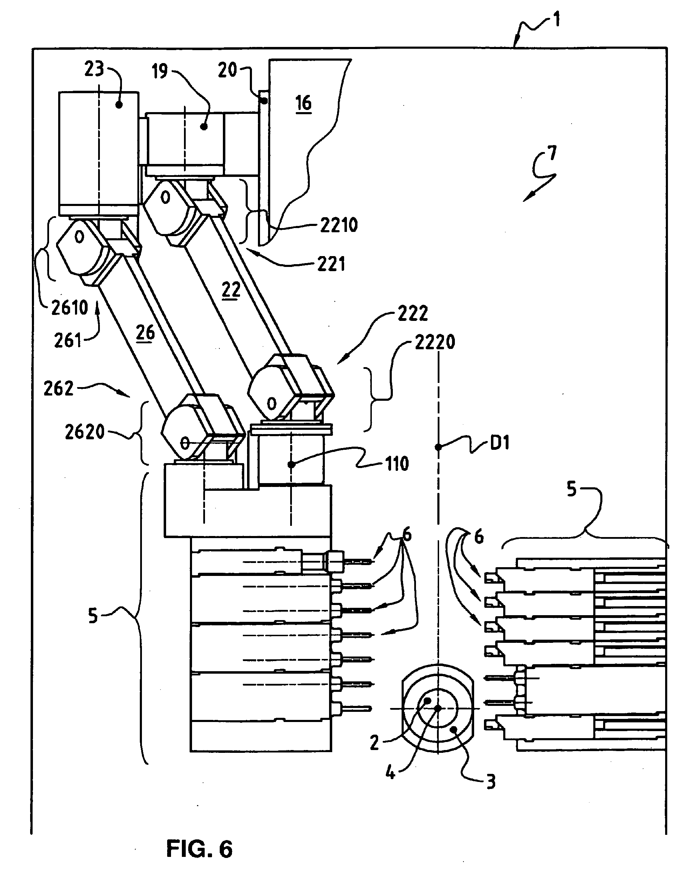

- figure 6, en vue de dessus, une machine-outil équipée de deux dispositifs selon l'invention,
- figure 7, le dispositif de la figure 4, vu selon la flèche F.

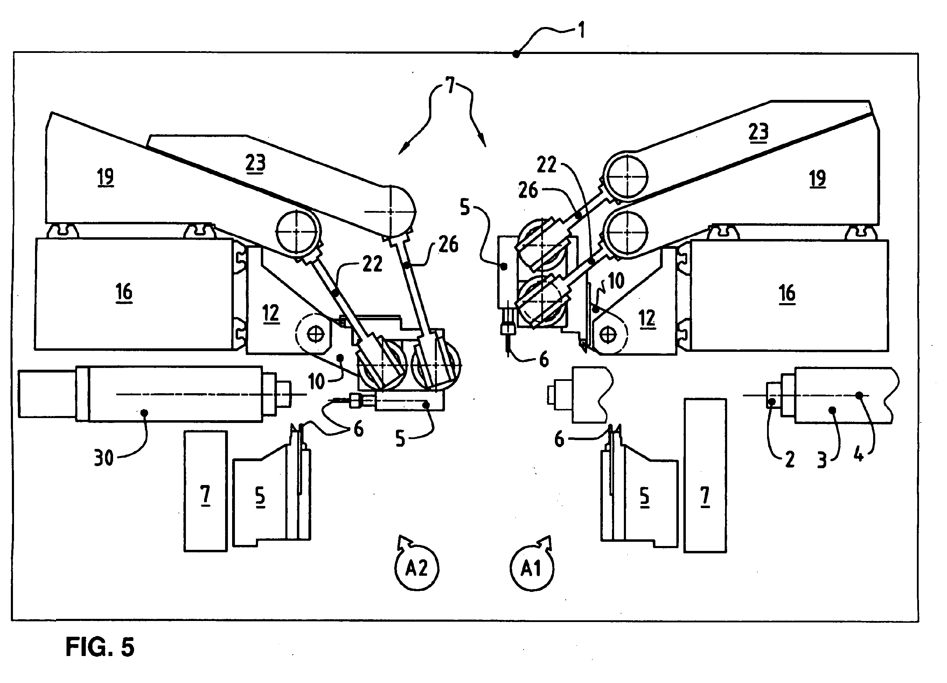

En se reportant au dessin, on voit une machine-outil 1 (figure 5) permettant de réaliser des pièces par usinage, ces pièces étant dites pièces à usiner 2.

Tel que cela apparaît au dessin, outre un bâti 100, dont seul un fragment est représenté, la machine-outil 1 comprend :
- au moins un premier appareil 3, telle une broche, pour maintenir un premier corps, telle une pièce à usiner 2, en une position prédéterminée par rapport à au moins un axe prédéterminé, dit axe de référence 4,
- au moins un ensemble porte-outil 5 qui porte au moins un second corps, tel un outil 6, et
- au moins un dispositif 7 pour déplacer le dit ensemble porte-outil 5 entre,
   - une première zone 8 de la machine-outil 1 dans laquelle le second corps, tel un outil 6, porté par cet ensemble porte-outil 5 peut entrer en contact avec le premier corps, telle la pièce à usiner 2, et
   - une deuxième zone 9 de la machine-outil 1 dans laquelle cet ensemble porte-outil 5 peut être totalement escamoté de manière à libérer la première zone 8.

Par exemple, le premier corps consiste en un outil 6 et le second corps consiste en une pièce à usiner 2, mais le premier corps peut aussi consister en une pièce à usiner 2 et le second corps consister en un outil 6.

On peut aussi envisager :
- la situation dans laquelle, le premier corps consiste en un outil 6 et le second corps consiste également en un outil 6, ou
- la situation dans laquelle, le premier corps consiste en une pièce à usiner 2 et le second corps consiste aussi en une pièce à usiner 2.

L'expression "peut entrer en contact", dans la phrase "le second corps, tel un outil 6, porté par cet ensemble porte-outil 5 peut entrer en contact avec le premier corps, telle la pièce à usiner 2," n'est pas limitative de la nature, ni de l'étendue du contact, ni de la durée de ce contact.

Il peut s'agir, par exemple, d'un contact ponctuel de palpage, tel un contact permettant un relevé de position, mais il peut aussi s'agir d'un contact prolongé qui modifie la géométrie d'un des dits premier ou second corps, par exemple d'un contact provoquant un enlèvement de matière.

Avantageusement, le premier corps est un outil d'usinage 5 et le second corps est une pièce à usiner 2, mais cela n'exclut pas la réciproque, à savoir le premier corps est une pièce à usiner 2 et le second corps est un outil d'usinage 5.

Le premier appareil 3 est avantageusement une broche qui maintient le premier corps, à savoir la pièce à usiner 2, en une position prédéterminée par rapport à au moins un axe prédéterminé, dit axe de référence 4, et notamment en position alignée sur ledit axe de référence 4.

Au moins un dispositif 7 pour déplacer l'ensemble porte-outil 5 comprend :
- un premier élément 10 qui porte l'ensemble porte-outil 5 via un premier moyen fonctionnel de guidage en rotation 11 autour d'un premier axe de guidage 110 dont l'orientation et la position sont prédéterminées par rapport à l'axe de référence 4,
- un second élément 12 qui porte le premier élément 10 via un second moyen fonctionnel de guidage en rotation 13 autour d'un second axe de guidage 130 sensiblement parallèle au premier axe de guidage 110 et séparé de celui-ci d'une première distance prédéterminée L1,
- un premier ensemble fonctionnel 14, de déplacement commandé du premier élément 10 autour du second axe de guidage 130,
- un second ensemble fonctionnel 15 de déplacement commandé de l'ensemble porte-outil 5 autour du premier axe de guidage 110.

En figure 5, on note que la machine-outil 1 comprend deux dispositifs de déplacement 7 du type précité.

La première distance déterminée est non nulle, c'est-à-dire a une valeur supérieure à zéro.

L'homme de l'art est à même de choisir la première distance prédéterminée L1, par calcul(s) et/ou par essai(s), sans avoir à faire preuve d'invention.

Par exemple, le dispositif 7 situé dans la partie droite de la figure 5 est destiné à travailler sur un premier corps consistant en une pièce à usiner 2 tenue par une broche 3 et le dispositif situé dans la partie gauche de la figure 5 est destiné à travailler sur un autre premier corps consistant en une autre pièce à usiner 2 portée, par exemple, par une contre-broche 30.

De manière notable, le premier axe de guidage 110 est parallèle à une première direction D1 qui est quant à elle sensiblement perpendiculaire à l'axe de référence 4.

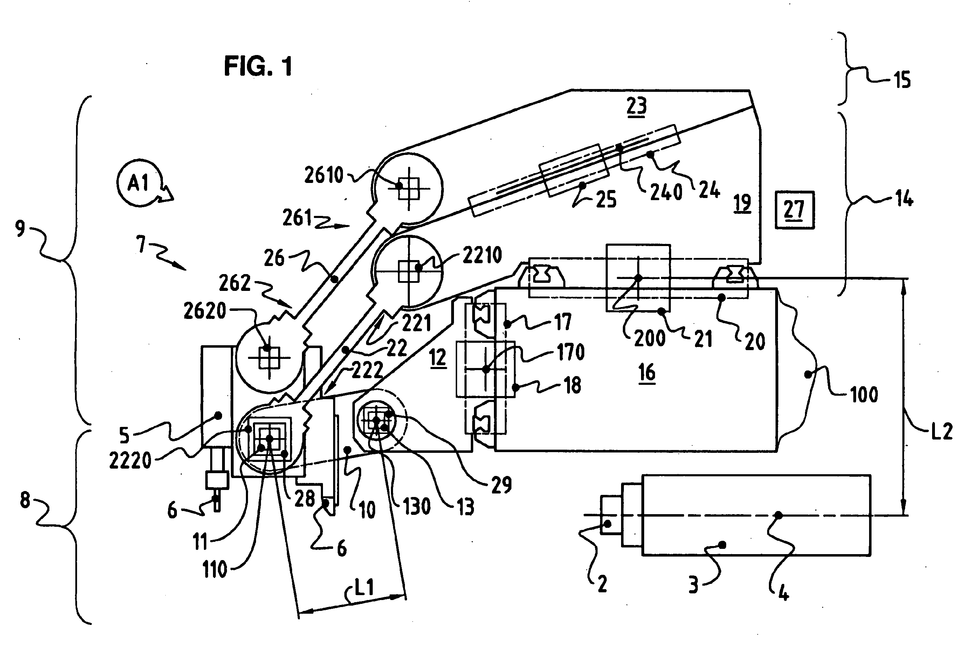

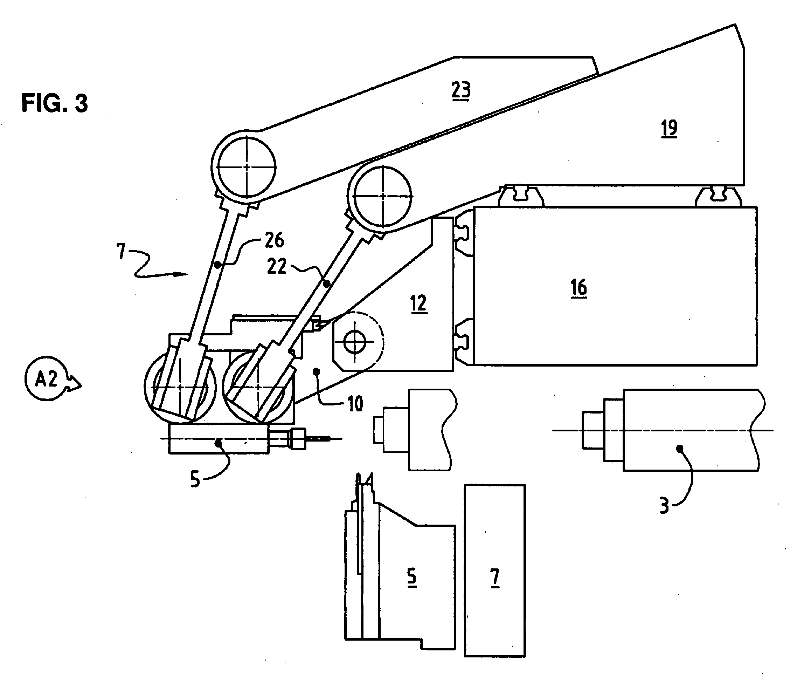

La présence du premier moyen fonctionnel de guidage en rotation 11 autour du premier axe de guidage 110 et du second moyen fonctionnel de guidage en rotation 13 autour du second axe de guidage 130 permet :
- de déplacer l'ensemble porte-outil 5 entre,
   - une première zone 8 de la machine-outil 1 dans laquelle un second corps, tel outil 6, porté par cet ensemble porte-outil 5 peut entrer en contact avec un premier corps, telle une pièce à usiner 2, aligné sur l'axe de référence 4 de la machine-outil 1, et
   - une deuxième zone 9 de la machine-outil dans laquelle cet ensemble porte-outil 5 peut être totalement escamoté de cette première zone 8,
- de placer l'ensemble porte-outil 5 dans la première zone 8 de manière telle qu'au moins,
   - dans une première position A1 (par exemple, figure 1), au moins un second corps, tel un outil 6, porté par cet ensemble porte-outil 5 peut être présenté sensiblement radialement à un premier corps, telle une pièce à usiner 2, aligné sur l'axe de référence 4 de la machine-outil 1 et
   - dans une deuxième position A2 (par exemple, figure 3), au moins un second corps, tel un outil 6, porté par cet ensemble porte-outil 5 peut être présenté sensiblement axialement à un premier corps, telle une pièce à usiner 2.

Pour l'actionnement de l'ensemble porte-outil 5, en vue d'au moins l'une des actions que sont le déplacement et le positionnement dudit ensemble porte-outil 5, le dispositif 7, comprend un troisième élément 16 qui porte le second élément 12 par :
- un troisième moyen fonctionnel 17 de guidage en translation selon un troisième axe de guidage 170 sensiblement parallèle au premier axe de guidage 110,
- un quatrième moyen fonctionnel 18 de déplacement commandé indexé en translation selon le troisième axe de guidage 170.

Le troisième élément 16 est relié au bâti 100 de la machine-outil 1 ou, au moins, fait partie de ce bâti 100.

La présence du troisième élément 16 et des moyens fonctionnels 17, 18 (troisième moyen fonctionnel 17 et quatrième moyen fonctionnel 18) qui lui sont associés permet notamment d'ajuster la position de l'ensemble porte-outil 5 par rapport à l'axe de référence 4 et selon un troisième axe de guidage 170 qui est perpendiculaire à l'axe de référence 4.

Particulièrement, lorsque l'axe de référence 4 est sensiblement horizontal et que ledit premier axe de guidage 110 est sensiblement vertical, la présence du troisième élément 16 et des moyens fonctionnels 17, 18 qui lui sont associés permet notamment d'ajuster en hauteur, la position de l'ensemble porte-outil 5 par rapport à l'axe de référence 4.

Le premier ensemble fonctionnel 14 de déplacement commandé du premier élément 10 autour du second axe de guidage 130, comprend :
- un quatrième élément 19 porté par le troisième élément 16 par,
   - un cinquième moyen fonctionnel 20 de guidage en translation selon un quatrième axe de guidage 200 sensiblement parallèle au premier axe de guidage 110 et situé à une seconde distance prédéterminée L2 de l'axe de référence 4,
   - un sixième moyen fonctionnel 21 de déplacement commandé en translation selon le quatrième axe de guidage 200,
- un premier bras 22 comprenant deux extrémités opposées 221, 222 dont une première extrémité 221 qui est associée de manière articulée au quatrième élément 19 et une seconde extrémité 222 qui est associée de manière articulée à l'ensemble porte-outil 5,
de manière telle que lorsque le quatrième élément 19 est déplacé en translation par rapport au premier élément 10, le premier bras 22 actionne l'ensemble porte-outil 5 et engendre le pivotement de cet ensemble porte-outil 5 autour du premier de rotation 110.

La seconde distance déterminée est non nulle, c'est-à-dire a une valeur supérieure à zéro.

L'homme de l'art est à même de choisir la seconde distance prédéterminée L2 sans avoir à faire preuve d'invention.

De manière remarquable, le premier bras 22 est, par son extrémité dite première 221, articulé sur l'ensemble porte-outil 5 au niveau du premier axe 110.

De manière remarquable, par rapport à un plan, dit de référence, considéré comme sensiblement horizontal, d'une part, contenant l'axe de référence 4 et, d'autre part, auquel le premier axe de guidage 110 est orthogonal, la première extrémité 221 du premier bras 22 est située au-dessus du niveau de la seconde extrémité 222 dudit premier bras 22.

Le second ensemble fonctionnel 15 de déplacement commandé de l'ensemble porte-outil 5 autour du premier axe de guidage 110 comprend :
- un cinquième élément 23 porté par le quatrième élément 19 par,
   - un septième moyen fonctionnel 24 de guidage en translation selon un cinquième axe de guidage 240 qui, en projection dans un plan dit de référence, d'une part, contenant l'axe de référence 4 et, d'autre part, auquel le premier axe de guidage 110 est orthogonal, est sécante à cet axe de référence 4,
   - un huitième moyen fonctionnel 25 de déplacement commandé en translation selon le cinquième axe de guidage 240,
- un second bras 26 comprenant deux extrémités opposées dont une troisième extrémité 261 qui est associée de manière articulée au cinquième élément 23 et une quatrième extrémité 262 qui est associée de manière articulée à l'ensemble porte-outil 5,
de manière telle que lorsque le cinquième élément 23 est déplacé en translation par rapport au premier élément 10 le second bras 26 actionne l'ensemble porte-outil 5 et engendre le pivotement de cet ensemble porte-outil 5 autour du premier axe de rotation 110.

De manière remarquable, par rapport à un plan, dit de référence, considéré comme sensiblement horizontal, d'une part, contenant l'axe de référence 4 et, d'autre part, auquel le premier axe de guidage 110 est orthogonal, la troisième extrémité 261 du second bras 26 est située au dessus du niveau de la quatrième extrémité 262 dudit second 26 bras.

Le dispositif 7 comprend un neuvième moyen fonctionnel 27 pour gérer la commande,
- du quatrième moyen fonctionnel 18 de déplacement commandé en translation selon le troisième axe de guidage 170, et
- du sixième moyen fonctionnel 21 de déplacement commandé en translation selon le quatrième axe de guidage 200, et
- du huitième moyen fonctionnel 25 de déplacement commandé en translation selon le cinquième axe de guidage 250,
de manière telle que :
- le quatrième moyen 18 soit utilisé pour ajuster la hauteur de l'ensemble porte-outil 5 par rapport à l'axe de référence 4, sans que cela induise obligatoirement au moins l'un des pivotement que sont,
   - un pivotement dudit ensemble porte-outil 5 selon le premier axe de guidage 110, et
   - un pivotement du premier élément 10 selon le second axe de guidage 130, et
- le sixième moyen 21 soit utilisé pour ajuster la position de l'ensemble porte-outil selon le premier axe 110, sans que cela induise obligatoirement au moins l'un des pivotements que sont,
   - un pivotement dudit ensemble porte-outil 5 selon le premier axe de guidage 110, et
   - un pivotement du premier élément 10 selon le second axe de guidage 130,
- le huitième moyen fonctionnel 25 soit utilisé pour ajuster la position de l'ensemble porte-outil selon le premier axe 100, sans que cela induise obligatoirement un pivotement du premier élément 10 selon le second axe de guidage 130.

Le neuvième moyen fonctionnel 27 gère la commande du quatrième moyen fonctionnel 18, du sixième moyen fonctionnel 21, du huitième moyen fonctionnel 25 en fonction d'ordres de commande qui lui ont été imposés.

Avantageusement, le neuvième moyen fonctionnel 27 fait partie de moyen de commande numérique (non représentés) que la machine-outil 1 comprend et ce neuvième moyen fonctionnel exploite des ordres de commandes préétablis en fonction d'un profil de pièce à usiner 2.

Quoiqu'il en soit, on comprend donc que les pivotements de l'ensemble porte-outil 5 et du premier élément 10 sont obtenus par des déplacements relatifs en translation d'éléments, dont le second élément 12, le troisième élément 16, le quatrième élément 19, le cinquième élément 23.

Pour mémoire :
- le second élément 12 porte le premier élément 10 via un second moyen fonctionnel de guidage en rotation 13 autour d'un second axe de guidage 130 sensiblement parallèle au premier axe de guidage 110 et séparé de celui-ci d'une première distance prédéterminée L1,
- le troisième élément 16 porte le second élément 12 par,
   - un troisième moyen fonctionnel 17 de guidage en translation selon un troisième axe de guidage 170 sensiblement parallèle au premier axe de guidage 110,
   - un quatrième moyen fonctionnel 18 de déplacement commandé en translation selon le troisième axe de guidage 170.
- le quatrième élément 19 est porté par le troisième élément 16 par,
   - un cinquième moyen fonctionnel 20 de guidage en translation selon un quatrième axe de guidage 200 sensiblement parallèle au premier axe de guidage 110 et situé à une seconde distance prédéterminée L2 de l'axe de référence 4,
   - un sixième moyen fonctionnel 21 de déplacement commandé en translation selon le quatrième axe de guidage 200,
- le cinquième élément 23 est porté par le quatrième élément 19 par,
   - un septième moyen fonctionnel 24 de guidage en translation selon un cinquième axe de guidage 240 qui, en projection dans un plan horizontal contenant l'axe de référence 4, est sécante à cet axe de référence 4,
   - un huitième moyen fonctionnel 25 de déplacement commandé en translation selon le cinquième axe de guidage 250.

Les éléments et le moyen fonctionnels utilisés pour obtenir les pivotements ont également une fonction de réglage de position selon l'axe de guidage.

Le dispositif selon l'invention est donc économique en terme de moyens fonctionnels de déplacement commandé.

Par ailleurs, avantageusement, il ne met en oeuvre que des moyens de déplacement en translation.

De manière remarquable, le premier moyen fonctionnel de guidage en rotation 11 de l'ensemble porte-outil 5 autour du premier axe de guidage 110 comprend un dixième moyen fonctionnel 28 d'indication au neuvième moyen fonctionnel 27 de la position angulaire de l'ensemble porte-outil 5 autour du premier axe de guidage 110.

De manière remarquable, second moyen fonctionnel de guidage en rotation 13 du premier élément 10 autour du second axe de guidage 130 comprend un onzième moyen fonctionnel 29 d'indication au neuvième moyen fonctionnel 27 de la position angulaire du premier élément 10 autour du second axe de guidage 130.

Ces particularités techniques permettent de s'affranchir du paramétrage de la position des moyens fonctionnels que sont :
- le quatrième moyen fonctionnel 18 de déplacement commandé en translation selon le troisième axe de guidage 170,
- le sixième moyen fonctionnel 21 de déplacement commandé en translation selon le quatrième axe de guidage 200,
- le huitième moyen fonctionnel 25 de déplacement commandé en translation selon le cinquième axe de guidage 250.

De manière remarquable :
- la première extrémité 221 du premier bras 22 est associée de manière articulée au quatrième élément 19 par un premier organe 2210 de liaison de type à rotule,
- la seconde extrémité 222 du premier bras 22 est associée de manière articulée à l'ensemble porte-outil 5, par un second organe de liaison 2220 de type à rotule.

De manière encore remarquable :
- la troisième extrémité 261 du second bras 26 est associée de manière articulée au cinquième élément 23 par un troisième organe de liaison 2610 de type à rotule,
- la quatrième extrémité 262 du second bras 26 est associée de manière articulée à l'ensemble porte-outil 5 par un quatrième organe de liaison 2620 de type à rotule.

## Revendications

1. Dispositif (7) pour déplacer un ensemble porte-outil (5) entre,
- une première zone (8) d'une machine-outil (1) dans laquelle un second corps porté par ledit ensemble porte-outil (5) peut entrer en contact avec un premier corps ayant une position prédéterminée par rapport à au moins un axe prédéterminé, dit axe de référence (4), et
- une deuxième zone (9) de la machine-outil (1) dans laquelle cet ensemble porte-outil (5) peut être totalement escamoté de manière à libérer la première zone (8),
le dispositif (7) pour déplacer l'ensemble porte-outil (5) comprenant
- un premier élément (10) qui porte l'ensemble porte-outil (5) via un premier moyen fonctionnel de guidage en rotation (11) autour d'un premier axe de guidage (110) dont l'orientation et la position sont prédéterminées par rapport à l'axe de référence (4),
- un second élément (12) qui porte le premier élément (10) via un second moyen fonctionnel de guidage en rotation (13) autour d'un second axe de guidage (130) sensiblement parallèle au premier axe de guidage (110) et séparé de celui-ci d'une première distance prédéterminée (L1),
- pour l'actionnement de l'ensemble porte-outil (5), en vue d'au moins l'une des actions que sont le déplacement et le positionnement dudit ensemble porte-outil (5), un troisième élément (16) qui porte le second élément (12) par un troisième moyen fonctionnel (17) de guidage en translation selon un troisième axe de guidage (170) sensiblement parallèle au premier axe de guidage (110),
- un quatrième moyen fonctionnel (18) de déplacement commandé en translation selon le troisième axe de guidage (170),
- un premier ensemble fonctionnel (14), de déplacement commandé du premier élément (10) autour du second axe de guidage (130),
- un second ensemble fonctionnel (15) de déplacement commandé de l'ensemble porte-outil (5) autour du premier axe de guidage (110),
le dispositif (7) pour déplacer l'ensemble porte-outil (5) étant **caractérisé en ce que** le premier ensemble fonctionnel (14), de déplacement commandé du premier élément (10) autour du second axe de guidage (130), comprend :
- un quatrième élément (19) porté par le troisième élément (16),
- un cinquième moyen fonctionnel (20) de guidage en translation selon un quatrième axe de guidage (200) sensiblement parallèle au premier axe de guidage (110) et situé à une seconde distance prédéterminée (L2) de l'axe de référence (4),
- un sixième moyen fonctionnel (21) de déplacement commandé en translation selon le quatrième axe de guidage (200),
- un premier bras (22) comprenant deux extrémités opposées (221), (222) dont une première extrémité (221) qui est associée de manière articulée au quatrième élément (19) et une seconde extrémité (222) qui est associée de manière articulée à l'ensemble porte-outil (5),
de manière telle que lorsque le quatrième élément (19) est déplacé en translation par rapport au premier élément (10), le premier bras (22) actionne l'ensemble porte-outil (5) et engendre le pivotement de cet ensemble porte-outil (5) autour du premier axe de guidage (110).

2. Dispositif selon la revendication 1, **caractérisé en ce que** le premier axe de guidage (110) est parallèle à une première direction (D1) qui est quant à elle sensiblement perpendiculaire à l'axe de référence (4).

3. Dispositif selon la revendication 1, **caractérisé en ce que**, le premier bras (22) est, par son extrémité dite première (221), articulé sur l'ensemble porte-outil (5) au niveau du premier axe (110).

4. Dispositif selon l'une quelconque des revendications 1 à 3, **caractérisé en ce que**, par rapport à un plan, dit de référence, considéré comme sensiblement horizontal, d'une part, contenant l'axe de référence (4) et, d'autre part, auquel le premier axe de guidage (110) est orthogonal, la première extrémité (221) du premier bras (22) est située au-dessus du niveau de la seconde extrémité (222) dudit premier bras (22).

5. Dispositif selon l'une quelconque des revendications 1 à 4, **caractérisé en ce que**, le second ensemble fonctionnel (15) de déplacement commandé de l'ensemble porte-outil (5) autour du premier axe de guidage (110) comprend :
- un cinquième élément (23) porté par le quatrième élément (19) par,
. un septième moyen fonctionnel (24) de guidage en translation selon un cinquième axe de guidage (240) qui, en projection dans un plan, dit de référence, d'une part, contenant l'axe de référence (4) et, d'autre part, auquel le premier axe de guidage (110) est orthogonal, est sécante à cet axe de référence (4),
. un huitième moyen fonctionnel (25) de déplacement commandé en translation selon le cinquième axe de guidage (250),
- un second bras (26) comprenant deux extrémités opposées dont une troisième extrémité (261) qui est associée de manière articulée au cinquième élément (23) et une quatrième extrémité (262) qui est associée de manière articulée à l'ensemble porte-outil (5),
de manière telle que lorsque le cinquième élément (23) est déplacé en translation par rapport au premier élément (10) le second bras (26) actionne l'ensemble porte-outil (5) et engendre le pivotement de cet ensemble porte-outil (5) autour du premier axe de rotation (110).

6. Dispositif selon la revendication 5, **caractérisé en ce que**, par rapport à un plan dit de référence, considéré comme sensiblement horizontal, d'une part, contenant l'axe de référence (4) et, d'autre part, auquel le premier axe de guidage (110) est orthogonal, la troisième extrémité (261) du second bras (26) est située au-dessus du niveau de la quatrième extrémité (262) dudit second bras (26).

7. Dispositif selon l'une des revendications 5 ou 6, **caractérisé en ce qu'**il comprend un neuvième moyen fonctionnel (27) pour gérer la commande,
. du quatrième moyen fonctionnel (18) de déplacement commandé en translation selon le troisième axe de guidage (170), et
. du sixième moyen fonctionnel (21) de déplacement commandé en translation selon le quatrième axe de guidage (200), et
. du huitième moyen fonctionnel (25) de déplacement commandé en translation selon le cinquième axe de guidage (250),
de manière telle que :
- le quatrième moyen (18) soit utilisé pour ajuster la hauteur de l'ensemble porte-outil (5) par rapport à l'axe de référence (4), sans que cela induise obligatoirement au moins l'un des pivotements que sont,
. un pivotement dudit ensemble porte-outil (5) selon le premier axe de guidage (110), et
. un pivotement du premier élément (10) selon le second axe de guidage (130), et
- le sixième moyen (21) soit utilisé pour ajuster la position de l'ensemble porte-outil selon le premier axe (110), sans que cela induise obligatoirement au moins l'un des pivotements que sont,
. un pivotement dudit ensemble porte-outil (5) selon le premier axe de guidage (110), et
. un pivotement du premier élément (10) selon le second axe de guidage (130),
- le huitième moyen fonctionnel (25) soit utilisé pour ajuster la position de l'ensemble porte-outil (5) selon le premier axe (100), sans que cela induise obligatoirement un pivotement du premier élément (10) selon le second axe de guidage (130).

8. Dispositif selon l'une quelconque des revendications 1 à 7 **caractérisé en ce que** le premier moyen fonctionnel de guidage en rotation (11) de ensemble porte-outil (5) autour du premier axe de guidage (110) comprend un dixième moyen fonctionnel (28) d'indication au neuvième moyen fonctionnel (27) de la position angulaire de l'ensemble porte-outil (5) autour du premier axe de guidage (110).

9. Dispositif selon l'une quelconque des revendications 1 à 8 **caractérisé en ce que** le second moyen fonctionnel de guidage en rotation (13) du premier élément (10) autour du second axe de guidage (130) comprend un onzième moyen fonctionnel (29) d'indication au neuvième moyen fonctionnel (27) de la position angulaire du premier élément (10) autour du second axe de guidage (130).

10. Dispositif selon l'une quelconque des revendications 1 à 9 **caractérisé en ce que** :
- la première extrémité (221) du premier bras (22) est associée de manière articulée au quatrième élément (19) par un premier organe (2210) de liaison de type à rotule,
- la seconde extrémité (222) du premier bras (22) est associée de manière articulée à l'ensemble porte-outil (5), par un second organe de liaison (2220) de type à rotule.

11. Dispositif selon l'une quelconque des revendications 5 à 9 **caractérisé en ce que** :
- la troisième extrémité (261) du second bras (26) est associée de manière articulée au cinquième élément (23) par un troisième organe de liaison (2610) de type à rotule,
- la quatrième extrémité (262) du second bras (26) est associée de manière articulée à l'ensemble porte-outil (5) par un quatrième organe de liaison (2620) de type à rotule.

12. Dispositif selon l'une des revendications 1 à 11 **caractérisé en ce que** le premier corps consiste en un outil (6) et le second corps consiste en une pièce à usiner (2).

13. Dispositif selon l'une des revendications 1 à 11 **caractérisé en ce que** le premier corps consiste en une pièce à usiner (2) et le second corps consiste en un outil (6).

14. Dispositif selon l'une des revendications 1 à 11 **caractérisé en ce que** le premier corps consiste en un outil (6) et le second corps consiste également en un outil (6).

15. Dispositif selon l'une des revendications 1 à 11 **caractérisé en ce que** le premier corps consiste en une pièce à usiner (2) et le second corps consiste aussi en une pièce à usiner (2).

16. Machine-outil **caractérisée en ce qu'**elle est équipée d'au moins un dispositif selon l'une quelconque des revendications 1 à 15.

## Claims

1. Device (7) for moving a tool carrier assembly (5) between
- a first zone (8) of a machine tool (1) in which a second body borne by said tool carrier assembly (5) can enter into contact with a first body having a predetermined position with respect to at least one predetermined axis, referred to as reference axis (4), and
- a second zone (9) of the machine tool (1) in which this tool carrier assembly (5) can be totally retracted in such a way as to free the first zone (8),
the device (7) for moving the tool carrier assembly (5) comprising
- a first element (10) which bears the tool carrier assembly (5) via a first functional means of guiding in rotation (11) about a first guide axis (110), the alignment and the position of which are predetermined in relation to the reference axis (4),
- a second element (12) which bears the first element (10) via a second functional means of guiding in rotation (13) about a second guide axis (130) substantially parallel to the first guide axis (110) and separated therefrom by a first predetermined distance (L1),
- for actuation of the tool carrier assembly (5), with a view to at least one of the actions which are the movement and the positioning of said tool carrier assembly (5), a third element (16) that bears the second element (12) by a third functional means (17) of guiding in translation along a third guide axis (170) substantially parallel to the first guide axis (110),
- a fourth functional means (18) of controlled movement in translation along the third guide axis (170),
- a first functional assembly (14), of controlled movement of the first element (10) about the second guide axis (130),
- a second functional assembly (15) of controlled movement of the tool carrier assembly (5) about the first guide axis (110),
the device (7) for moving the tool carrier assembly (5) being **characterised in that** the first functional assembly (14) of controlled movement of the first element (10) about the second guide axis (130), comprises:
- a fourth element (19) borne by the third element (16),
- a fifth functional means (20) of guiding in translation along a fourth guide axis (200) substantially parallel to the first guide axis (110) and situated at a second predetermined distance (L2) from the reference axis (4),
- a sixth functional means (21) of controlled movement in translation along the fourth guide axis (200),
- a first arm (22) comprising two opposite ends (221), (222) which are a first end (221) that is connected in an articulated way to the fourth element (19) and a second end (222) that is connected in an articulated way to the tool carrier assembly (5),
in such a way that when the fourth element (19) is moved in translation with respect to the first element (10), the first arm (22) actuates the tool carrier assembly (5) and brings about the pivoting of this tool carrier assembly (5) about the first guide axis (110).

2. Device according to claim 1, **characterised in that** the first guide axis (110) is parallel to a first direction (D1) which is itself substantially perpendicular to the reference axis (4).

3. Device according to claim 1, **characterised in that** the first arm (22) is articulated, by its end referred to as first end (221), on the tool carrier assembly (5) at the level of the first axis (110).

4. Device according to any one of the claims 1 to 3, **characterised in that**, with respect to a plane, referred to as reference plane, considered substantially horizontal, on the one hand containing the reference axis (4) and on the other hand to which the first guide axis (110) is orthogonal, the first end (221) of the first arm (22) is situated above the level of the second end (222) of said first arm (22).

5. Device according to any one of the claims 1 to 4, **characterised in that** the second functional assembly (15) of controlled movement of the tool carrier assembly (5) about the first guide axis (110) comprises:
- a fifth element (23) borne by the fourth element (19) by
• a seventh functional means (24) of guiding in translation along a fifth guide axis (240) which, in projection in a plane, referred to as reference plane, on the one hand, containing the reference axis (4) and, on the other hand, to which the first guide axis (110) is orthogonal, is intersecting with respect to this reference axis (4),
• an eighth functional means (25) of controlled movement in translation along the fifth guide axis (250),
- a second arm (26) comprising two opposite ends which are a third end (261) that is connected in an articulated way to the fifth element (23) and a fourth end (262) which is connected in an articulated way to the tool carrier assembly (5),
in such a way that when the fifth element (23) is moved in translation in relation to the first element (10) the second arm (26) actuates the tool carrier assembly (5) and brings about the pivoting of this tool carrier assembly (5) about the first axis of rotation (110).

6. Device according to claim 5, **characterised in that**, with respect to a plane referred to as reference plane, considered as substantially horizontal, on the one hand, containing the reference axis (4) and, on the other hand, to which the first guide axis (110) is orthogonal, the third end (261) of the second arm (26) is situated above the level of the fourth end (262) of said second arm (26).

7. Device according to one of the claims 5 or 6, **characterised in that** it comprises a ninth functional means (27) for managing the control
• of the fourth functional means (18) of controlled movement in translation along the third guide axis (170), and
• of the sixth functional means (21) of controlled movement in translation along the fourth guide axis (200), and
• of the eighth functional means (25) of controlled movement in translation along the fifth guide axis (250),
in such a way that:
- the fourth means (18) is used to adjust the height of the tool carrier assembly (5) with respect to the reference axis (4), without this necessarily causing at least one of the pivot movements which are
• a pivoting of said tool carrier assembly (5) along the first guide axis (110), and
• a pivoting of the first element (10) along the second guide axis (130), and
- the sixth means (21) is used to adjust the position of the tool carrier assembly along the first axis (110), without this necessarily causing at least one of the pivot movements which are
• a pivoting of said tool carrier assembly (5) along the first guide axis (110), and
• a pivoting of the first element (10) along the second guide axis (130),
- the eighth functional means (25) is used to adjust the position of the tool carrier assembly (5) along the first axis (100), without this necessarily causing a pivoting of the first element (10) along the second guide axis (130).

8. Device according to any one of the claims 1 to 7, **characterised in that** the first functional means of guiding in rotation (11) of the tool carrier assembly (5) about the first guide axis (110) comprises a tenth functional means (28) of indication to the ninth functional means (27) of the angular position of the tool carrier assembly (5) about the first guide axis (110).

9. Device according to any one of the claims 1 to 8, **characterised in that** the second functional means of guiding in rotation (13) of the first element (10) about the second guide axis (130) comprises an eleventh functional means (29) of indication to the ninth functional means (27) of the angular position of the first element (10) about the second guide axis (130).

10. Device according to any one of the claims 1 to 9, **characterised in that**:
- the first end (221) of the first arm (22) is connected in an articulated way to the fourth element (19) by a first connecting element (2210) of ball and socket type,
- the second end (222) of the first arm (22) is connected in an articulated way to the tool carrier assembly (5), by a second connecting element (2220) of ball and socket type.

11. Device according to any one of the claims 5 to 9, **characterised in that**:
- the third end (261) of the second arm (26) is connected in an articulated way to the fifth element (23) by a third connecting element (2610) of ball and socket type,
- the fourth end (262) of the second arm (26) is connected in an articulated way to the tool carrier assembly (5) by a fourth connecting element (2620) of ball and socket type.

12. Device according to one of the claims 1 to 11, **characterised in that** the first body consists of a tool (6), and the second body consists of a piece to be machined (2).

13. Device according to one of the claims 1 to 11, **characterised in that** the first body consists of a piece to be machined (2) and the second body consists of a tool (6).

14. Device according to one of the claims 1 to 11, **characterised in that** the first body consists of a tool (6) and the second body likewise consists of a tool (6).

15. Device according to one of the claims 1 to 11, **characterised in that** the first body consists of a piece to be machined (2) and the second body also consists of a piece to be machined (2).

16. Machine tool **characterised in that** it is equipped with at least one device according to any one of the claims 1 to 15.

## Patentansprüche

1. Vorrichtung (7), um eine Werkzeughalteranordnung (5) zu bewegen zwischen:
- einem ersten Bereich (8) einer Werkzeugmaschine (1), in der ein zweiter Körper, gehalten von der Werkzeughalteranordnung (5), mit einem ersten Körper in Kontakt treten kann, der hinsichtlich mindestens einer vorbestimmten Achse, genannt Bezugsachse (4), eine vorbestimmte Position einnimmt, und
- einem zweiten Bereich (9) der Werkzeugmaschine (1), in den diese Werkzeughalteranordnung (5) vollständig eingezogen werden kann, um den ersten Bereich (8) freizugeben,
wobei die Vorrichtung (7), um die Werkzeughalteranordnung (5) zu bewegen, Folgendes umfasst:
- ein erstes Element (10), das die Werkzeughalteranordnung (5) über ein erstes funktionelles Mittel zum drehbaren Führen (11) um eine erste Führungsachse (110) hält, deren Ausrichtung und Position hinsichtlich der Bezugsachse vorbestimmt (4) sind,
- ein zweites Element (12), das das erste Element (10) über ein zweites funktionelles Mittel zum drehbaren Führen (13) um eine zweite Führungsachse (130) hält, die im Wesentlichen parallel zur ersten Führungsachse (110) und von dieser durch einen ersten vorbestimmten Abstand (L1) getrennt ist,
- für die Betätigung der Werkzeughalteranordnung (5) angesichts mindestens einer der Wirkungen, d.h. der Bewegung und der Positionierung der Werkzeughalteranordnung (5), ein drittes Element (16), das das zweite Element (12) durch ein drittes funktionelles Mittel (17) zum drehbaren Führen entlang einer dritten Führungsachse (170) hält, die im Wesentlichen parallel zur ersten Führungsachse (110) ist,
- ein viertes funktionelles Mittel (18) zur gesteuerten drehbaren Bewegung entlang der dritten Führungsachse (170),
- eine erste funktionelle Anordnung (14) zur gesteuerten Bewegung des ersten Elementes (10) um die zweite Führungsachse (130),
- eine zweite funktionelle Anordnung (15) zur gesteuerten Bewegung der Werkzeughalteranordnung (5) um die erste Führungsachse (110),
wobei die Vorrichtung (7), um die Werkzeughalteranordnung (5) zu bewegen, **dadurch gekennzeichnet ist, dass** die erste funktionelle Anordnung (14) zur gesteuerten Bewegung des ersten Elementes (10) um die zweite Führungsachse (130) Folgendes umfasst:
- ein viertes Element (19), gehalten vom dritten Element (16),
- ein fünftes funktionelles Mittel (20) zum drehbaren Führen entlang einer vierten Führungsachse (200), die im Wesentlichen parallel zur ersten Führungsachse (110) und in einem zweiten vorbestimmten Abstand (L2) von der Bezugsachse (4) angebracht ist,
- ein sechstes funktionelles Mittel (21) zur gesteuerten drehbaren Bewegung entlang der vierten Führungsachse (200),
- einen ersten Arm (22), umfassend zwei gegenüber liegende Enden (221), (222), davon einem ersten Ende (221), das mit dem vierten Element (19) beweglich verbunden ist, und einem zweiten Ende (222), das beweglich mit der Werkzeughalteranordnung (5) verbunden ist,
so dass, wenn das vierte Element (19) hinsichtlich des ersten Elementes (10) drehbar bewegt wird, der erste Arm (22) die Werkzeughalteranordnung (5) betätigt und die Drehung dieser Werkzeughalteranordnung (5) um die erste Führungsachse (110) hervorruft.

2. Vorrichtung nach Anspruch 1, **dadurch gekennzeichnet, dass** die erste Führungsachse (110) parallel zu einer ersten Richtung (D1) ist, die ihrerseits im Wesentlichen senkrecht zur Bezugsachse (4) ist.

3. Vorrichtung nach Anspruch 1, **dadurch gekennzeichnet, dass** der erste Arm (22) durch sein Ende, genannt erstes Ende (221), mit der Werkzeughalteranordnung (5) auf der Ebene der ersten Achse (110) beweglich verbunden ist.

4. Vorrichtung nach einem der Ansprüche 1 bis 3, **dadurch gekennzeichnet, dass**, hinsichtlich einer Ebene, genannt Bezugsebene, die als im Wesentlichen horizontal erachtet wird, einerseits umfassend die Bezugsachse (4) und zu der, andererseits, die erste Führungsachse (110) rechtwinklig ist, das erste Ende (221) des ersten Arms (22) über der Ebene des zweiten Endes (222) des ersten Arms (22) angeordnet ist.

5. Vorrichtung nach einem der Ansprüche 1 bis 4, **dadurch gekennzeichnet, dass**, die zweite funktionelle Anordnung (15) zur gesteuerten Bewegung der Werkzeughalteranordnung (5) um die erste Führungsachse (110) Folgendes umfasst:
- ein fünftes Element (23), gehalten vom vierten Element (19) durch,
. ein siebtes funktionelles Mittel (24) zum drehbaren Führen entlang einer fünften Führungsachse (240), die, in Projektion auf eine Ebene, genannt Bezugsebene, einerseits umfassend die Bezugsachse (4) und zu der, andererseits, die erste Führungsachse (110) rechtwinklig ist, zu dieser Bezugsachse (4) schneidend ist,
. ein achtes funktionelles Mittel (25) zur gesteuerten drehbaren Bewegung entlang der fünften Führungsachse (250),
- ein zweiter Arm (26), umfassend zwei gegenüber liegende Enden, davon ein drittes Ende (261), das beweglich mit dem fünften Element (23) verbunden ist, und ein viertes Ende (262), das beweglich mit der Werkzeughalteranordnung (5) verbunden ist,
so dass, wenn das fünfte Element (23) hinsichtlich des ersten Elementes (10) drehbar bewegt wird, der zweite Arm (26) die Werkzeughalteranordnung (5) betätigt und die Drehung dieser Werkzeughalteranordnung (5) um die erste Drehachse (110) erzeugt.

6. Vorrichtung nach Anspruch 5, **dadurch gekennzeichnet, dass**, hinsichtlich einer Ebene, genannt Bezugsebene, die als im Wesentlichen horizontal erachtet wird, einerseits umfassend die Bezugsachse (4) und zu der, andererseits, die erste Führungsachse (110) rechtwinklig ist, das dritte Ende (261) des zweiten Arms (26) über der Ebene des vierten Endes (262) des zweiten Arms (26) angeordnet ist.

7. Vorrichtung nach einem der Ansprüche 5 oder 6, **dadurch gekennzeichnet, dass** sie ein neuntes funktionelles Mittel (27) umfasst, um die Steuerung zu verwalten,
. des vierten funktionellen Mittels (18) zur gesteuerten drehbaren Bewegung entlang der dritten Führungsachse (170), und
. des sechsten funktionellen Mittels (21) zur gesteuerten drehbaren Bewegung entlang der vierten Führungsachse (200), und
. des achten funktionellen Mittels (25) zur gesteuerten drehbaren Bewegung entlang der fünften Führungsachse (250),
so dass:
- das vierte Mittel (18) verwendet wird, um die Höhe der Werkzeughalteranordnung (5) bezüglich der Bezugsachse (4) einzustellen, ohne, dass dies notwendigerweise zu mindestens einer der Drehungen führt, d.h.
. einer Drehung der Werkzeughalteranordnung (5) entlang der ersten Führungsachse (110), und
. einer Drehung des ersten Elements (10) entlang der zweiten Führungsachse (130), und
- das sechste Mittel (21) verwendet wird, um die Position der Werkzeughalteranordnung entlang der ersten Achse (110) einzustellen, ohne, dass dies notwendigerweise zu mindestens einer der Drehungen führt, d.h.
. einer Drehung der Werkzeughalteranordnung (5) entlang der ersten Führungsachse (110), und
. einer Drehung des ersten Elements (10) entlang der zweiten Führungsachse (130), und
- das achte funktionelle Mittel (25) verwendet wird, um die Position der Werkzeughalteranordnung (5) entlang der ersten Achse (100) einzustellen, ohne, dass dies notwendigerweise zu einer der Drehungen des ersten Elements (10) entlang der zweiten Führungsachse (130) führt.

8. Vorrichtung nach einem der Ansprüche 1 bis 7, **dadurch gekennzeichnet, dass** das erste funktionelle Mittel zur drehbaren Führung (11) der Werkzeughalteranordnung (5) um die erste Führungsachse (110) ein zehntes funktionelles Mittel (28) zur Angabe der Winkelposition der Werkzeughalteranordnung (5) um die erste Führungsachse (110) an das neunte funktionelle Mittel (27) umfasst.

9. Vorrichtung nach einem der Ansprüche 1 bis 8, **dadurch gekennzeichnet, dass** das zweite funktionelle Mittel zur drehbaren Führung (13) des ersten Elementes (10) um die zweite Führungsachse (130) ein elftes funktionelles Mittel (29) zur Angabe der Winkelposition des ersten Elements (10) um die zweite Führungsachse (130) an das neunte funktionelle Mittel (27) umfasst.

10. Verfahren nach einem der Ansprüche 1 bis 9, **dadurch gekennzeichnet, dass**:
- das erste Ende (221) des ersten Arms (22) mit dem vierten Element (19) durch ein erstes Verbindungsorgan (2210) des Typs Kugelgelenk beweglich verbunden ist,
- das zweite Ende (222) des ersten Arms (22) mit der Werkzeughalteranordnung (5) durch ein zweites Verbindungsorgan (2220) des Typs Kugelgelenk beweglich verbunden ist.

11. Verfahren nach einem der Ansprüche 5 bis 9, **dadurch gekennzeichnet, dass**:
- das dritte Ende (261) des zweiten Arms (26) mit dem fünften Element (23) durch ein drittes Verbindungsorgan (2610) des Typs Kugelgelenk beweglich verbunden ist,
- das vierte Ende (262) des zweiten Arms (26) mit der Werkzeughalteranordnung (5) durch ein viertes Verbindungsorgan (2620) des Typs Kugelgelenk beweglich verbunden ist.

12. Vorrichtung nach einem der Ansprüche 1 bis 11, **dadurch gekennzeichnet, dass** der erste Körper ein Werkzeug (6) umfasst und der zweite Körper ein Werkstück (2) umfasst.

13. Vorrichtung nach einem der Ansprüche 1 bis 11, **dadurch gekennzeichnet, dass** der erste Körper ein Werkstück (2) umfasst und der zweite Körper ein Werkzeug (6) umfasst.

14. Vorrichtung nach einem der Ansprüche 1 bis 11, **dadurch gekennzeichnet, dass** der erste Körper ein Werkzeug (6) umfasst und der zweite Körper ebenfalls ein Werkzeug (6) umfasst.

15. Vorrichtung nach einem der Ansprüche 1 bis 11, **dadurch gekennzeichnet, dass** der erste Körper ein Werkstück (2) umfasst und der zweite Körper ebenfalls ein Werkzeug (2) umfasst.

16. Werkzeugmaschine, **dadurch gekennzeichnet, dass** sie mit mindestens einer Vorrichtung nach einem der Ansprüche 1 bis 15 ausgestattet ist.
